# EUROPEAN PATENT APPLICATION

(11) **EP 1 454 560 A1**
(43) Date of publication of application: **08.09.2004**
(21) Application number: 04251313.5
(22) Date of filing: 05.03.2004
(51) Int. Cl.: A45F 3/04, A47C 7/74, F16F 3/087

(54) **Cushion for a back support**

(30) Priority: 05.03.2003 KR 2003206468
(71) Applicant: Korea Industrial Fastener Corporation, Chungcheongnam-Do 330-020 (KR)
(72) Inventor: Seong, Song Eun, Seoul 157-871 (KR)
(74) Representative: Hale, Peter

(57) **Abstract**

The present invention relates to cushion members for a back support provided on various articles such as rucksack and chair to well ventilate between a user's back and the back support, so that the perspiration and heat generation by the user can considerably be reduced. The cushion member for a back support comprises a base (2) made from hard plastic material; and a plurality of cushioning elements (3) provided on one side of the base where the user's back contacts, wherein each of the cushioning elements includes a plurality of ribs (8) forming an internal space (7) therein and a plurality of holes (9) formed by the neighboring ribs and communicated with the internal space.

## Description

The present invention relates to cushion members for a back support, and more particularly to cushion members for a back support provided on various articles such as a rucksack or a chair to ventilate between a user's back and the back support, so that perspiration and heat generation by the user can be reduced.

Generally, a rucksack is a bag made of sturdy material and furnished with shoulder straps. It is designed for carrying articles such as camping, fishing or traveling supplies on the back.

Recently, the rucksack has also been widely used by students for keeping their books and various things.

The rucksack comprises a body for keeping articles therein, a pair of shoulder straps attached to the body to be carried on both shoulders of a user, and an opening and closing means, e.g., a zipper to open and close the body.

In case of the rucksack for climbing, in addition to the shoulder straps, a waist belt and a breast belt are provided so that the rucksack can contact close to a user's waist and breast.

If such a rucksack is filled with various things and worn by the user by the shoulder straps, the load, due to the weight of the articles kept in the rucksack, causes the rucksack to contact the user's back closely.

Accordingly, if the rucksack is worn for a long time, the user perspires a lot through his back and gets hot, which leads the user to feel fatigue more easily and also deteriorates the comfort of wearing the sack.

In order to improve the above problems, a rucksack including a back support formed in the shape of meshes has been disclosed in Japanese Patent Publication No. 1991-71881, Japanese Patent Laid-Open No. 1996-242923, Japanese Patent No. 3034502 and Japanese Patent Laid-Open No. 2000-152819.

However, while such conventional rucksacks include fine meshes in the back supports, the size of the meshes was not sufficient for ventilation and they were still unpleasantness to wear for a long time.

During the summer season when the external temperature and/or humidity is very high, people who spend most of their working time sitting on chairs have no choice but to suffer a loss of concentration on their work or feel generally uncomfortable due to perspiration and heat generation from the back while sitting on chairs.

Accordingly, a object of the present invention is to provide cushion members for a back support provided on various articles such as a rucksack or a chair to ventilate between a user's back and the back support, so that the perspiration and heat generation by the user can considerably be reduced.

Another object of the present invention is to provide cushion members for a back support, which enables a user to feel cushioned and comfortable even after the user has worn a rucksack or sat on a chair for a long time.

The present invention is defined in the accompanying independent claim. Some preferred features are recited in the dependent claims.

According to one embodiment of the present invention, a cushion member for a back support provided on one side of articles with which a user's back contacts comprises:
a base made from hard plastic material; and
a plurality of cushioning elements provided on one side of the base where the user's back contacts, wherein each of the cushioning elements includes a plurality of ribs forming an internal space therein and a plurality of holes formed by the neighboring ribs and communicated with the internal space.

The accompanying drawings, which are included to provide a further understanding of the invention and are incorporated in and constitute a part of this specification, illustrate embodiments of the invention and together with the description serve to explain the principles of the invention, wherein:
Fig. 1 is a front view showing a first embodiment of the present invention;
Fig. 2 is a front view of a rucksack to which the first embodiment of the present invention is applied;
Fig. 3 is a sectional view along the line A-A of Fig. 2;
Fig. 4 is a sectional view of a cushioning element of a cushion member according to the present invention;
Fig. 5 is a front view showing a second embodiment of the present invention;
Fig. 6 is a sectional view along the line B-B of Fig. 5;
Fig. 7 is a front view showing a third embodiment of the present invention;
Fig. 8 is a front view showing a fourth embodiment of the present invention;
Fig. 9 is a perspective view showing a first embodiment of the cushioning elements according to the present invention;
Fig. 10 is a perspective view showing a second embodiment of the cushioning elements according to the present invention;
Fig. 11 is a perspective view showing a third embodiment of the cushioning element according to the present invention; and
Fig. 12 is a perspective view showing a fourth embodiment of the cushioning elements according to the present invention.

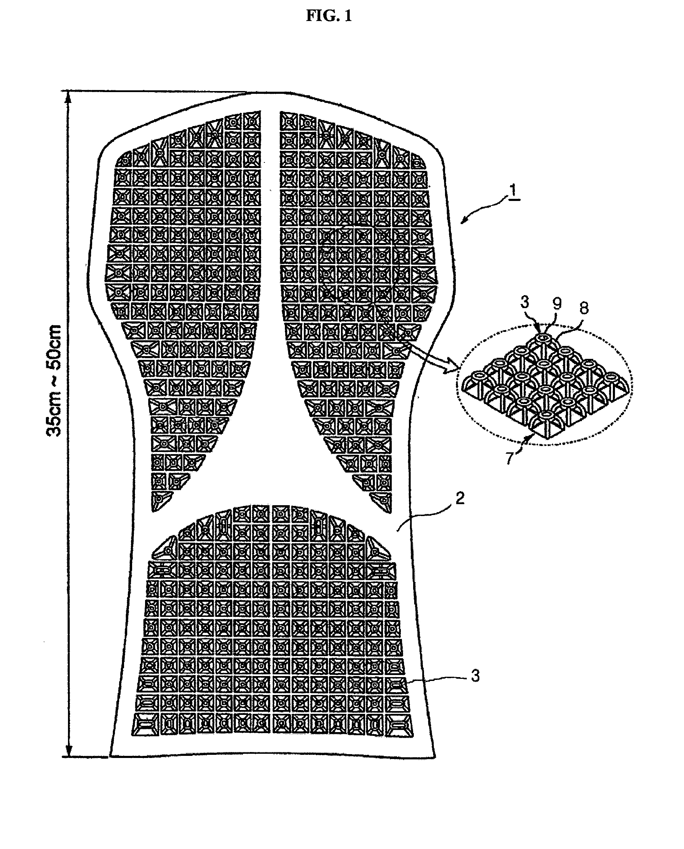

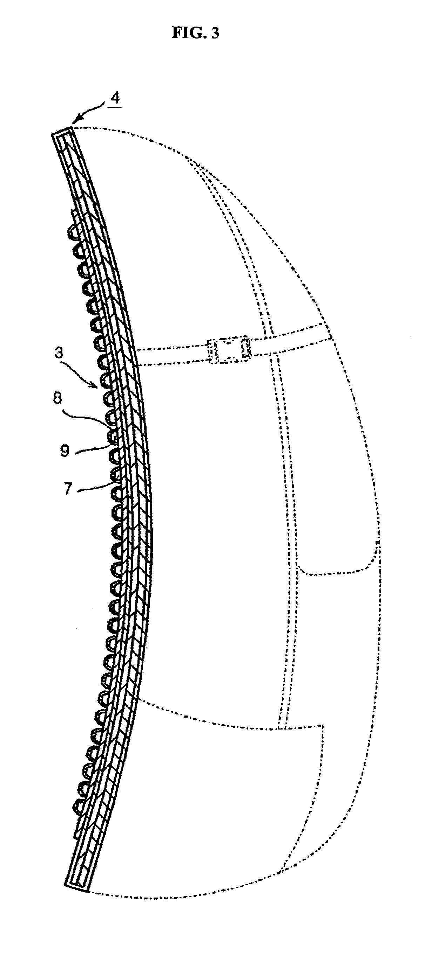

Figs. 1 to 3 show a first embodiment of the present invention, in which a cushion member (1) is provided on the back of a rucksack. The cushion member can be provided on one side of other various articles such as a chairback with which a user's back makes contact.

The cushion member (1) for a back support comprises a base (2) made from a rigid plastics material, which is a substitute for high-density foam sponge and urethane non-woven fabric, and a plurality of cushioning elements (3) provided on one side of the base (2) where the user's back contacts to ventilate between the user's back and the back support.

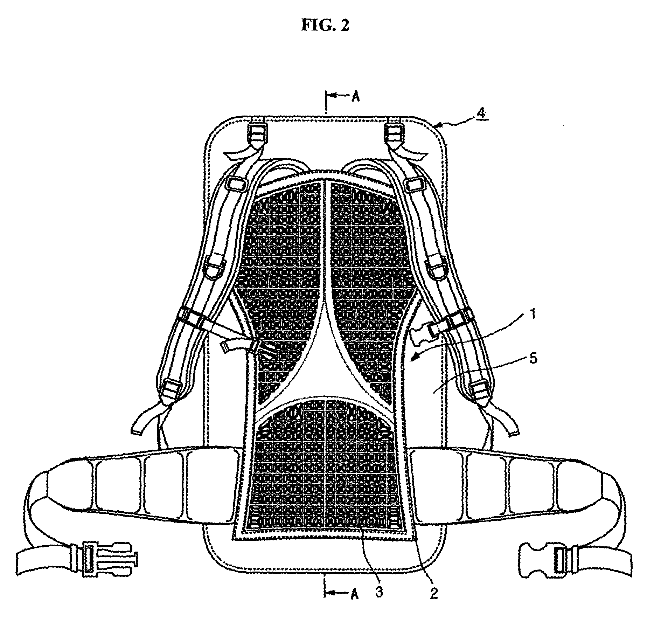

When the cushioning elements (3) are applied to a rucksack (4) as shown in Fig. 2, they do not only ventilate between a wearer's back and a back plate of the rucksack (5), but also diffuse the load of the rucksack (4) over the entire back of the wearer.

The base (2) may be formed in a size to contact the whole user's back. That is, the base (2) can be provided over the whole back plate (5) of the rucksack (4) as in Figs. 1 and 2.

Further, the base (2) can also be formed in a plurality of unit bases to be provided on different parts of the back support where the user's back contacts.

The cushioning elements (3) can be provided all over the base (2) or on a certain part of the base (2). As shown in Figs. 1 to 3, the cushioning elements (3) can be formed substantially all over the base (2).

Also, in consideration of the structure of human body, it is possible to provide a plurality of the unit bases or the cushioning elements (3) on certain parts of the back support where the user's back contacts, as shown in Figs. 5, 7 and 8. In this case, as the cushion member (1) consists of one unit member, it is convenient and simple to attach it to the back support.

In second and third embodiment according to the present invention as shown in Figs. 5 and 7, the base (2) is divided into two unit bases to be provided on two opposing parts of the back support of the rucksack (4) or the chair.

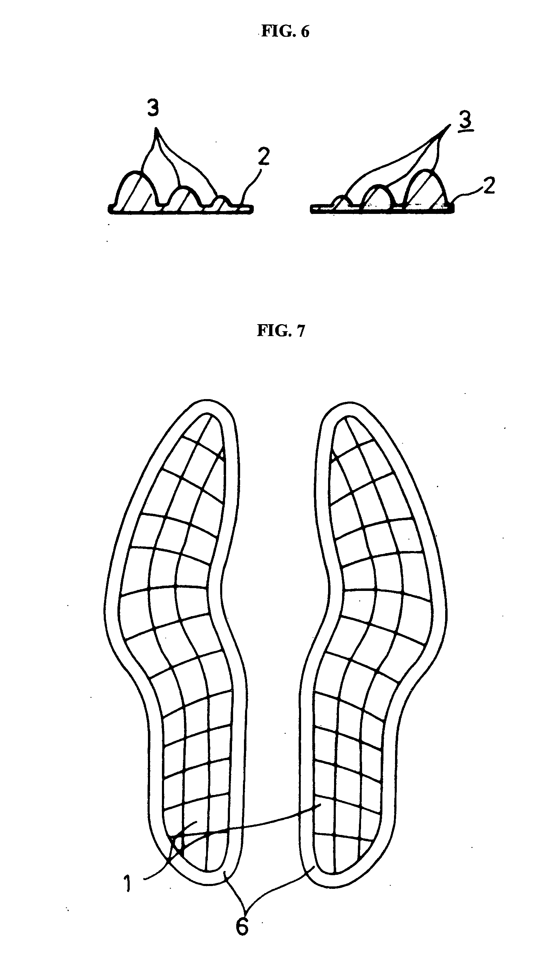

When the two unit bases (2) are symmetrically provided on the back support, it is preferable that the cushioning elements (3) be formed to have different heights and widths. That is, as shown in Fig. 6, the cushioning members (3) on the far edge of the unit base (2) can be formed to be higher and larger than those formed in the center of the unit base (2). In effect, the contacting surface provided by the cushioning elements is contoured to complement the shape of the back. This makes the wearer feel comfortable while shouldering the rucksack (4).

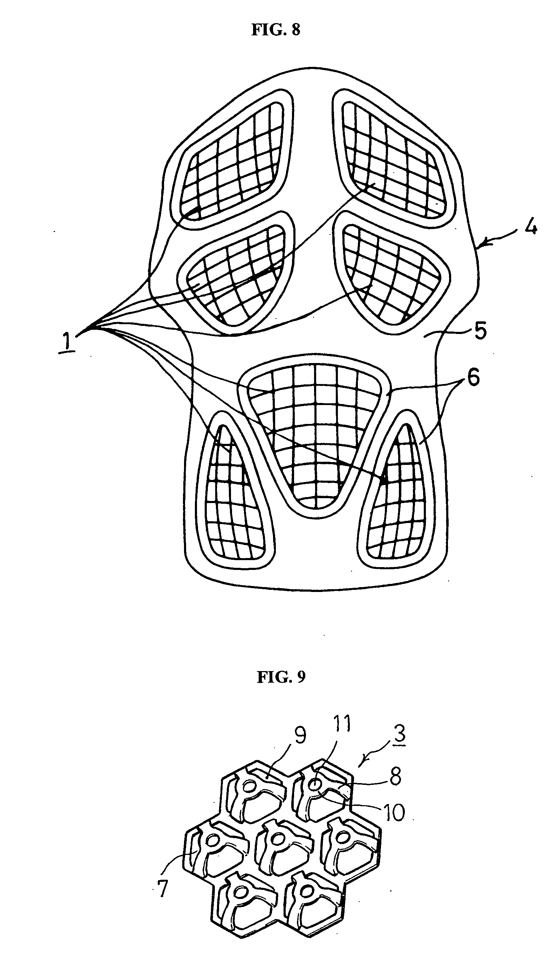

Fig. 8 is a front view of a fourth embodiment according to the present invention, wherein a plurality of the unit bases (2) are provided on seven different parts of the back support where the user's back contacts.

In this case, air ventilation is accomplished by the cushioning elements (3) on each of the unit bases (2) and also can be done through spaces formed among the plurality of the unit bases (2). Therefore, the effect of ventilation can considerably be enhanced.

In the fourth embodiment, as the cushion member (1) comprises a plurality of unit members (6), it may be troublesome to attach the unit members (6) to various parts of the back support of the rucksack (4) or the chair. However, by diversifying color, size, position, etc. of the unit members (6), the rucksack (4) or the chair can have various designs and provide aesthetic diversity.

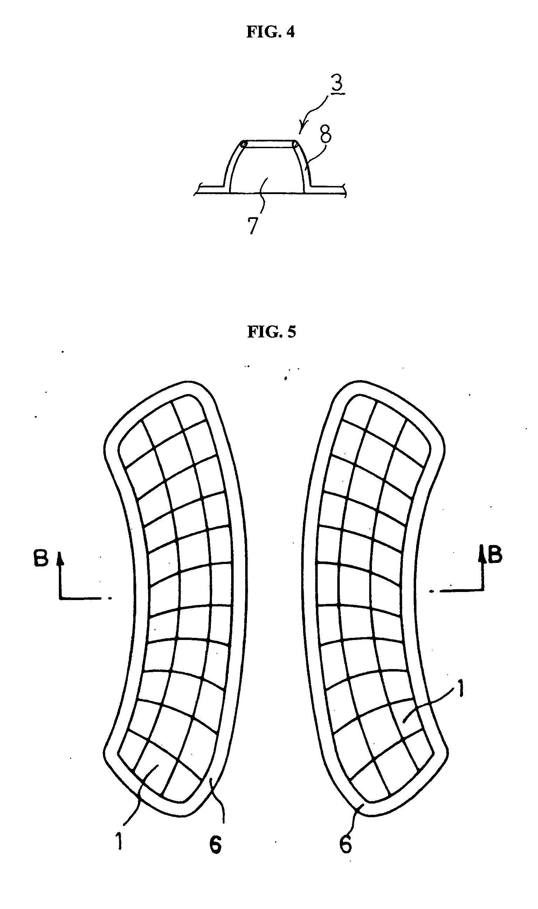

As shown in Figs. 4 and 9, each of the cushioning elements (3) formed on the base (2) comprises a plurality of rib members (8) forming an internal space (7) therein and a plurality of holes (9) formed between the ribs (8) and communicating with the internal space (7).

The ribs (8) act as the cushion of the cushioning elements (3). If the ribs (8) are too weak in their strength, the cushioning elements (3) can be easily flattened by the weight of goods contained in the rucksack (4), so that the internal space (7) can be eliminated and air ventilation cannot take place effectively. Therefore, it is preferable that the ribs (8) are made from a sufficiently rigid plastics material.

Conversely, if the ribs (8) are too rigid and do not give sufficiently, the comfort can be undermined.

Thus, the ribs (8) should preferably be designed to be comfortable to wear or contact, while avoiding the ventilating internal space (7) from being eliminated.

Fig. 9 shows a first embodiment of the cushioning elements (3) of the present invention, wherein the cushioning element (3) is in the form of honeycomb and includes three ribs (8). The ribs (8) form the internal space (7) therein and form three holes (9) communicated with the internal space (7) laterally. Further, the three ribs (8) converge to form a flat top surface (10), which is in contact with the user's back. Another hole (11) is provided in the center of the flat top surface (10) which also communicates with the internal space (7).

The hole (11) on the flat top surface (10) serves to minimize the insulating effect at the user's back by minimizing the contact area between the cushioning elements and the user's back, rather than simply to improve ventilation.

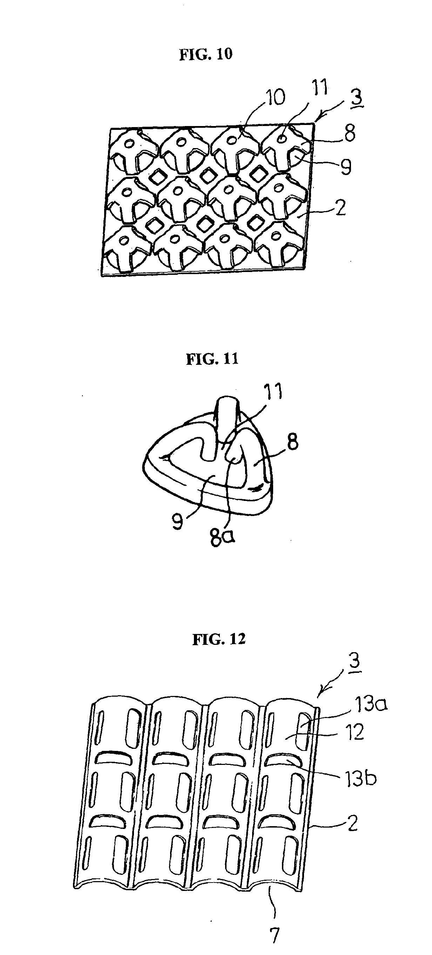

Fig. 10 shows a second embodiment of the cushioning elements (3) of the present invention, wherein each of the cushioning elements (3) is in the form of a curved quadrahedron and includes four ribs (8). The ribs (8) form the internal space (7) therein and form four holes (9) communicating with the internal space (7) laterally. Further, the four ribs (8) converge to form a flat top surface (10), which is in contact with the back of the user of the rucksack (4) or the chair. Another hole (11) is provided in the center of the flat top surface (10) to be communicating with the internal space (7). Other numbers of ribs could be used, such as five or six.

As in the first embodiment shown in Fig. 9, the hole (11) on the flat top surface (10) in Fig. 10 serves to reduce the generation of heat from the user's back by minimizing the contact area with the user's back.

Fig. 11 shows a third embodiment of the cushioning element (3) of the present invention, wherein the cushioning element (3) is in the form of a curved tetrahedron and includes three resilient ribs (8) or prongs extending inwardly towards a common central point. The resilient ribs (8) form the internal space (7) therein and define three holes (9) communicating with the internal space (7) laterally. However, the end of each of the three ribs (8) is internally curved so that curved ends (8a) of the ribs (8) form a space (11) about the central common point communicating with the internal space (7).

In this case, although the contact area between the cushioning elements (3) and the user's back can be minimized and the generation of heat and sweat from the user's back can be reduced, the ribs (8) do not converge to form any flat surface and stand independently. The ribs (8) in this embodiment are preferably be designed to be stronger than those in the other embodiments, because they are freestanding and the load imposed on them.

Fig. 12 shows a fourth embodiment of the cushioning elements (3) according to the present invention, wherein the cushioning elements (3) are consecutively arranged in the form of curved tiles (12), each of which includes alternately-arranged two vertical elongate holes (13a) or slots and one horizontal elongate hole (13b) or slot. The vertical holes (13a) and the horizontal holes (13b) communicate with the internal space (7).

According to the fourth embodiment as described above, the ventilation can be enhanced through the continuous furrows formed between the curved tiles (12) in the vertical direction of the drawing.

The cushioning elements (3) can be formed in an overall uniform pattern on one side of the base (2), but they can be formed to have various shapes depending on where they are located.

Specifically, since the flow or the supply of plastic resin when moulding (for example injection moulding) the article is not uniform to the edges of the base provided on the back support, the cushioning elements (3) may not be formed in a desired shape. Therefore, it is preferable that the cushioning elements (3) on the edge portions of the base be formed to have different shapes from those in the central portions. For example, as shown in Figs. 1 and 2, the cushioning elements (3) on the edge portions of the base may be formed to be larger than those in the central portions.

As described above, according to the present invention, it is possible to provide cushion members for a back support of a rucksack or a chair, which well ventilate between a user's back and the back support and reduce considerably the perspiration and heat generated by the user.

Further, the cushion members for a back support according to the present invention make a user feel cushioned and comfortable even after the user has worn a rucksack or sitting on a chair for a long time.

It will be apparent to those skilled in the art that various modifications and variations can be made to the present invention without departing from the scope of the invention. The present invention covers the modifications and variations provided they come within the scope of the appended claims and their equivalents.

## Claims

1. A cushion for a back support provided on a side of an article with which a user's back is arranged to contact comprising:
a base; and
a plurality of cushioning elements;
wherein each of the cushioning elements includes a plurality of members projecting from a face of the base to define an internal space, and a plurality of holes defined between adjacent members and communicating with the internal space.

2. A cushion for a back support as claimed in claim 1, wherein the cushioning elements are provided all over the base.

3. A cushion for a back support as claimed in claim 1, wherein the cushioning elements are provided on a proportion of the base.

4. A cushion for a back support as claimed in any one of claims 1 to 3,
wherein the base is formed in a size to contact the whole of a user's back.

5. A cushion for a back support as claimed in any one of claims 1 to 3,
wherein the base is formed in a plurality of discrete zones in different parts of the back support where the user's back contacts the member.

6. A cushion for a back support as claimed in claim 1, in which the cushioning elements define a lattice, for example each element including three members forming the internal space therein and three holes communicating with the internal space and a further hole provided in a surface formed by the convergence of the members also communicating with the internal space.

7. A cushion for a back support as claimed in claim 1, wherein each of the cushioning elements includes four ribs forming the internal space therein and four holes communicating with the internal space laterally, and a further hole provided in a surface formed by the convergence of the members communicating with the internal space.

8. A cushion for a back support as claimed in claim 1, wherein each of the cushioning elements includes a plurality (for example three) members (for example resilient members) forming the internal space therein and three holes communicating with the internal space laterally, the end of each of the three members being inwardly curved, the curved ends of the members forming a further hole communicating with the internal space.

9. A cushion for a back support as claimed in claim 1, wherein the cushioning elements are consecutively arranged in the form of projecting (for example curved) tiles, each of which includes holes, for example alternately-arranged two vertical elongate holes and one horizontal elongate hole, communicating with the internal space.

10. A cushion for a back support as claimed in claim 1, wherein the cushioning elements toward a periphery of the base are formed to have a different shape and/or size from those in an inner portion.
